# EUROPEAN PATENT APPLICATION

(11) **EP 3 578 632 A1**
(43) Date of publication of application: **11.12.2019**
(21) Application number: 19177605.3
(22) Date of filing: 31.05.2019
(51) Int. Cl.: C12G 1/06, C12C 11/00

(54) **APPARATUS FOR THE PRODUCTION OF SPARKLING WINES**

(30) Priority: 08.06.2018 IT 201800006148
(71) Applicant: Valerio, Antonio, 86170 Isernia IS (IT)
(72) Inventor: Valerio, Antonio, 86170 Isernia IS (IT)
(74) Representative: Leucci, Lidia

(57) **Abstract**

Apparatus for the production of sparkling wines, comprising a pressurized container suitable for withstanding a pressure of at least 6 bars, and preferably at least 8 bars, provided with an appropriate access provided with an autoclave closure, characterized in that said container is substantially spherical in shape .

## Description

The present invention relates to the production of wine, and particularly it relates to an apparatus for the production of sparkling wines.

Sparkling wines are generally obtained by second fermentation of a wine, or an assembly of wines, with the addition of appropriate amounts of sugars and yeasts, in a pressurized environment. The two main operating lines follow the so-called classic method, or champenois, in which the second fermentation is conducted directly in the bottle, or the Martinotti-Charmat method, in which the second fermentation is carried out on large quantities of wine in special containers, the so-called autoclaves.

If, as regards the classic method, that is the refermentation in the bottle, the technologies that have developed over time have generally concerned the chemical aspects, that is the selection and production of yeasts, and of aid to production, that is the operations of handling of the bottles such as rotation and inclination variation, in the Charmat method the impact of technologies has been characterized by the development of control systems for the environmental conditions inside the autoclave, the agitation, and the development of the structure of the autoclave itself, whose manufacturing technique has gone hand in hand with that of similar equipment used in the chemical and pharmaceutical industry.

However, a peculiarity of these reactors which has stimulated the research that led to the present invention is linked to the characteristic shape of the autoclaves, which for decades has been substantially unchanged, and which comprises a substantially cylindrical body with two spherical caps at the ends. This shape, which allows a good management of the spaces in the area destined for production, has however the drawback, only partly obviated by the presence of stirring means, of an uneven distribution of the pressure inside the reactor, which can have as a consequence of an inhomogeneous distribution of CO₂, both dissolved and total, with an impact on the characteristic perlage of sparkling wine and also on the organoleptic properties of the product obtained; to obtain high level results, it is normally necessary to have the product "worked" for a long enough time so that it is sufficiently balanced.

The aim of the present invention is therefore to provide an apparatus for the production of sparkling wines which spontaneously allows a better and more homogeneous distribution of the pressure inside it, and thus favors the correct balance between carbon dioxide and the aqueous phase in reduced times. Object of the present invention is therefore an apparatus for the production of sparkling wines comprising a pressurized container adapted to withstand a pressure of at least 6 bar, and preferably of at least 8 bar, provided with a suitable access provided with autoclave closure; said container is substantially spherical in shape.

In a first embodiment, said spherical container is made of stainless steel, provided with an inner insulation layer and provided with heat-exchanging means. The wall of this container has a thickness of between 0.2 mm and 1.00 mm, and preferably between 0.3 mm and 0.7 mm, more preferably it has a thickness of 0.5 mm. The container is preferably made by joining a plurality of spherical spindles, with two spherical caps arranged at the diametral ends of said spindles. The various parts of the container wall are assembled by welding, such as TIG welding. The container has a capacity in the order of 15-40 hi, and preferably in the order of 25 hi; against this capacity the container has a radius between about 0.7 m and about 1.0 m.

The insulating layer has a thickness that can range from 2.0 mm to 15.0 mm, depending on the insulating material used and the design needs of the container; in particular it is considered advantageous to insulate with a layer in the order of 10.0 mm of expanded polyurethane, typically with a closed cell, which can be suitably surface treated to be adapted to the food requirements, or it can be enclosed in a gap with a further spherical wall in steel.

In a second embodiment, said spherical container is a membrane of elastomeric material, with a wall thickness in the range of 1.0 to 4.0 mm, and preferably from 1.5 mm to 3.0 mm, more preferably of thickness in the order of 2.0 mm. The elastomeric material is selected from those which exhibit a tensile strength between 7 and 21 MPa, an elongation between 100% and 400%, and preferably 200%, and a good elastic yield. The elastomeric material must also be equipped with a good thermal inertia and a high resistance to water, to acids diluted in aqueous solution, to ethyl alcohol, and a low permeability to gases. Among the different elastomeric materials, it is therefore advantageous to choose those that are appropriate for food use; preferably, the elastomeric material will be an EPDM (ethylene propylene diene monomer), i.e. a terpolymer of ethylene and propylene grafted with a non-conjugated diene.

The container will have an initial volume equal to about 50% of the volume of a similar rigid-walled container, and will reach a volume, in the working regime, in the order of 15-40 hi. The container will be conveniently supported in a substantially cubic frame structure, provided with tie-rods in elastic material secured at one end to the container itself, and at the other end to one of the vertices of said frame. The container is provided with an autoclave door, and with a plurality of openings controlled by suitable valve means, and realized by tightening the wall of the container membrane with suitable seals. Inside the membrane are placed the heat exchange elements, preferably two plates with circulating ethylene glycol.

In a further embodiment, the spherical container is a membrane made of elastomeric material enclosed in a stainless steel casing, and is in practice a synthesis of the two embodiments described above; the external casing has the function of limiting the expansion of the elastomeric membrane, and therefore of controlling more effectively the sparkling pressure; the service ducts that are connected to the wall of the membrane pass through the openings formed in the outer casing with the appropriate clearances. The external casing in steel and the membrane in elastomeric material have substantially the same peculiarities described above.

Further advantages and characteristics of the apparatus according to the present invention will become clear from the detailed description of some embodiments of the same given, by way of example and not for limiting purposes, with reference to the tables of attached drawings, in which:
figure 1 is a front elevation view with parts in section of a first embodiment of the apparatus according to the present invention;
figure 2 is a front elevation view with parts in section of a second embodiment of the apparatus according to the present invention;
figure 3 is a longitudinal section view of an enlarged detail of figure 2; and
Figure 4 is a front elevation view with parts in section of a third embodiment of the apparatus according to the present invention.

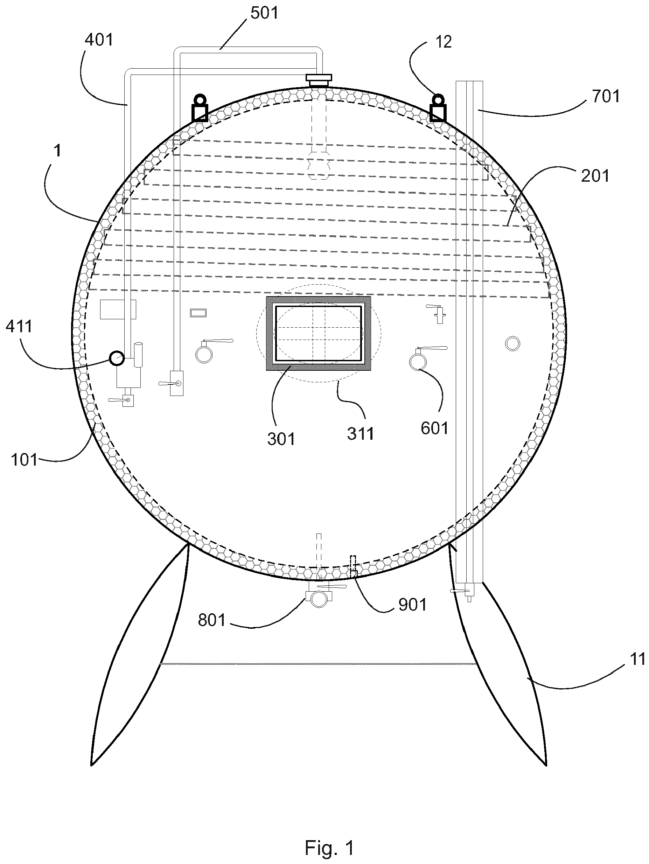

Figure 1 shows a first embodiment of the apparatus according to the present invention; 1 indicates the steel spherical container. Said container is provided with a layer 101 of insulating material, inside which the heat exchange coil 201 is arranged, in which typically ethylene glycol circulates. The container 1 is provided with the rectangular autoclave door 301, which opens inwards with an elliptical profile 301. From the top of the container 1 emerge the washing duct 501 and the vent 401, at whose free end the pressure gauge 411 is located. On the side wall the partial drain cock 601 is provided, while at the pole opposite to that from which the ducts 401 and 501 open the total discharge tap 801 is provided, near which the CO₂ discharge duct is located. The container 1 is supported by the legs 11, and can be lifted thanks to the towage rings 12. The container 1 is also provided with the level indicator 701.

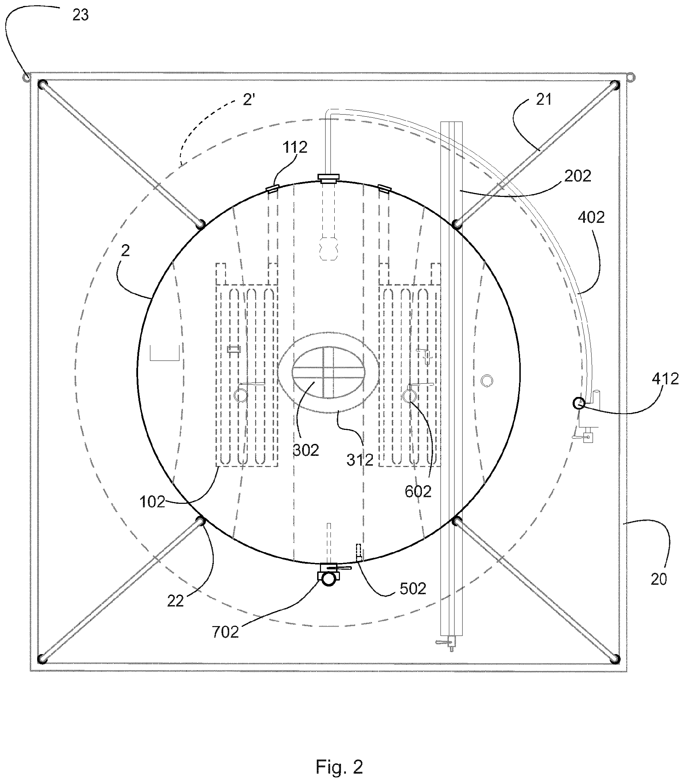

Figure 2 illustrates a second embodiment of the apparatus according to the present invention; 2 indicates the spherical container, which in this case is a membrane made of elastomeric material, capable of expanding in volume up to the dimensions shown with the dotted line and indicated with 2 '. The membrane 2 is provided with a vent duct 402, at the free end of which a pressure gauge 412 is placed; inside the membrane 2 two heat exchange plates 102 are arranged, which are fed through the respective openings 112. The membrane is equipped with an autoclave door 302 with an elliptical profile, as well as an elliptical profile is shown by its portion facing the interior 312. The partial discharge tap 602 is located on the membrane, in addition to the total discharge tap 702 and the CO₂ discharge duct 502. The spherical membrane 2 is connected to four tie rods 21 in the respective hooking points 22, and the tie rods 21 at the opposite end are coupled to four vertices of a cubic frame 20.

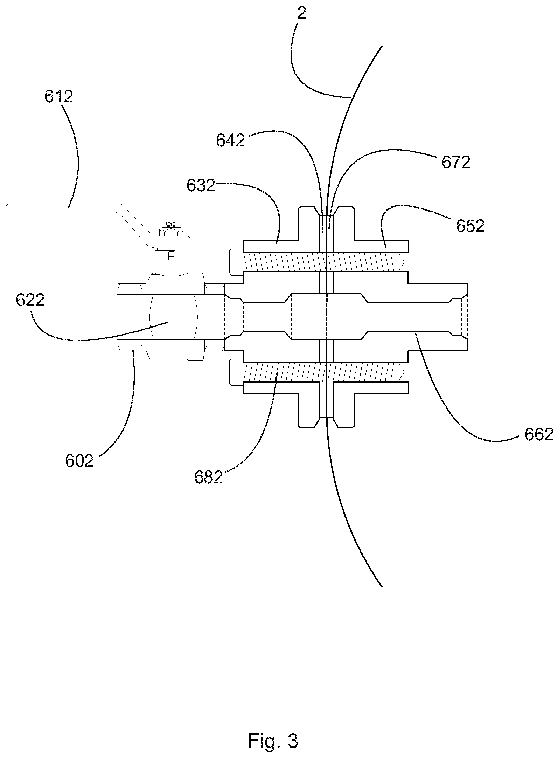

Figure 3 shows an enlarged detail in longitudinal section of Figure 2; equal parts correspond to the same numbers. The tap 602, provided with the lever 612 which controls the ball valve 622, is mounted on the membrane 2 thanks to a flanged body 632, which is coupled, with the interposition of the gaskets 642 and 672, to another flanged body 652 arranged inside the membrane 2, and provided with an axial duct 662. The two flanged bodies 632 and 652 are clamped together by the bolts 682. This type of constructive solution, for what is referred to herein as the partial discharge valve 602, can be used for all outputs or inlets of the membrane 2.

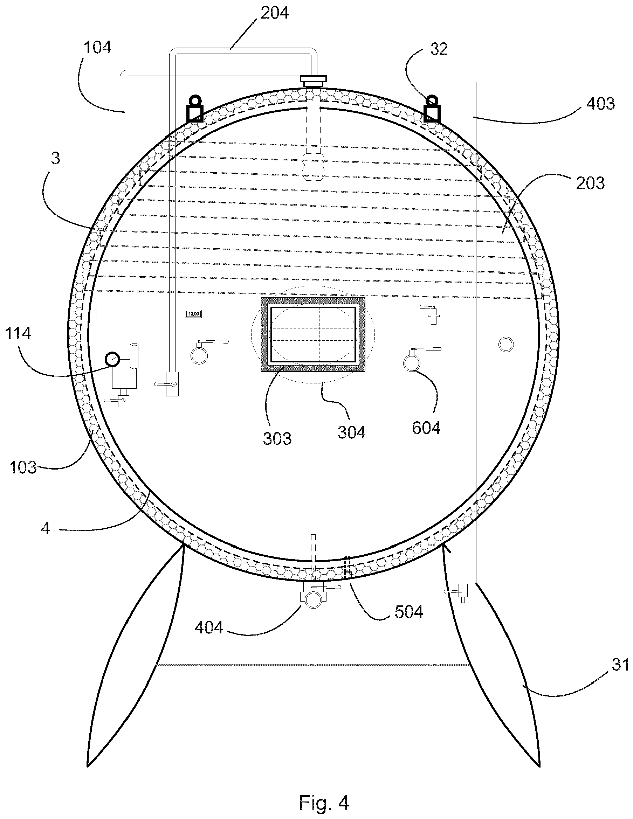

Figure 4 illustrates a third embodiment of the apparatus according to the present invention. The membrane 4 made of elastomeric material is in this case enclosed in an external steel casing 3, provided with the layer 103 of insulating material inside which the heat exchange coil 203 is arranged. The outer casing is provided with the door 303, while the membrane 4 is equipped with the autoclave door 304. The membrane 4 is also provided with the washing duct 204 and the vent duct 104, at the free end of which the manometer 114 is positioned. On the wall of the membrane 4, and through the wall of the housing 3 emerge: the partial discharge tap 604, the total drain tap 404, and the CO₂ discharge duct 504. The container is equipped with the level indicator 403, and rests on the legs 31, while it can be lifted thanks to the towage rings 32.

The operation and structure of the apparatus according to the present invention will appear evident from the following. In all the illustrated embodiments, the container for the apparatus for the production of sparkling wines according to the present invention has a substantially spherical shape, which differentiates it radically from the containers of the known type. In particular, the spherical shape has an advantage linked to the isotropy of the pressure that develops inside the container during the refermentation of the wine. In fact, the spherical shape favors the homogeneous distribution of carbon dioxide inside the container, and therefore reduces the need for agitation, which can also be omitted, and reduces overall fermentation times.

The container according to the embodiment shown in Figure 1 can be made by welding a plurality of spherical spindles; the number of spindles used derives from the correct compromise between harmonious development of the container and simplicity of construction. A preferable choice can be that of realizing a plurality of spherical spindles equal to each other, of amplitude between 30 ° and 60 °, and composing them by welding, preferably TIG welding.

The container of the embodiment illustrated in Figure 2, i.e. the membrane made of elastomeric material, has the advantage of starting from the first stages of fermentation to counteract the increase in volume of the wine, subjecting it to its own elastic recall force. The elastomeric material used for the membrane 2 is preferably selected from those which exhibit a tensile strength between 7 and 21 MPa, an elongation between 100% and 400%, and preferably 200%, and a good elastic yield. The elastomeric material must also be provided with a good thermal inertia and a high resistance to water, to acids diluted in aqueous solution, to ethyl alcohol, and showing a low permeability to gases.

Among the different elastomeric materials, it is therefore advantageous to choose those that are appropriate for food use; preferably, the elastomeric material will be an EPDM (ethylene propylene diene monomer), i.e. a terpolymer of ethylene and propylene grafted with a non-conjugated diene. The thickness of the membrane will be between 1.0 mm and 4.0 mm, and preferably from 1.5 mm to 3.0 mm, more preferably of a thickness in the order of 2.0 mm.

In the embodiment of Figure 4 the effects obtained with the previously described solutions are advantageously combined; in practice, the membrane 4, contained within the steel casing 3, can be made with reduced mechanical performances with respect to the membrane 2 described above, since the pressure inside said membrane is distributed on the walls of the outer casing 3. The ducts connected to the membrane 4 cross the wall of the casing by means of slots, not shown in the figure, which guide the radial sliding, without preventing their movement.

The apparatus for the production of sparkling wine according to the present invention allows to obtain a sparkling wine of better quality, through a more effective distribution of the pressure inside the fermenting product, and with a reduction in the fermentation times and in the need for agitation .

## Claims

1. Apparatus for the production of sparkling wines, comprising a pressurized container suitable for withstanding a pressure of at least 6 bars, and preferably at least 8 bars, provided with an appropriate access provided with an autoclave closure, **characterized in that** said container is substantially spherical in shape .

2. Apparatus according to claim 1, wherein said spherical container is made of stainless steel, provided with an inner insulating layer and equipped with heat-exchanging means.

3. Apparatus according to claim 2, wherein the wall of said container has a thickness comprised between 0.2 mm and 1.00 mm, and preferably between 0.3 mm and 0.7 mm, more preferably it has a thickness of 0, 5 mm.

4. Apparatus according to claim 2 or 3, wherein the container is made by joining a plurality of spherical wedges, with two spherical caps arranged at the diametrical ends of said wedges.

5. Apparatus according to any one of the preceding claims from 2 to 4, wherein the container has a capacity in the order of 15-40 hi, and preferably in the order of 25 hi.

6. Apparatus according to any one of the preceding claims from 2 to 5, wherein the insulating layer has a thickness from 2.0 mm to 15.0 mm.

7. Apparatus according to claim 1, wherein said spherical container is a membrane made of elastomeric material, having a wall thickness in the order of from 1.0 to 4.0 mm, and preferably from 1.5 mm to 3.0 mm, more preferably of thickness in the order of 2.0 mm.

8. Apparatus according to claim 7, wherein the elastomeric material is selected from those exhibiting a tensile strength between 7 and 21 MPa, an elongation between 100% and 400%, and preferably 200%, and a good elastic yield.

9. Apparatus according to claim 8, wherein the elastomeric material is an EPDM (ethylene propylene diene monomer), i.e. a terpolymer of ethylene and propylene grafted with an unconjugated diene.

10. Apparatus according to any one of the preceding claims from 7 to 9, wherein the container is conveniently supported in a substantially cubic frame structure, provided with tie rods made of elastic material secured at one end to the container itself, and at the other end to one of the vertices of said frame.

11. Apparatus according to any one of the preceding claims from 7 to 10, wherein the container is provided with an autoclave door, and a plurality of openings controlled by suitable valve means, and realized by tightening the wall of the container membrane with suitable seals.

12. Apparatus according to any one of the preceding claims from 7 to 11, wherein the heat exchange elements, preferably two ethylene glycol circulation plates, are located inside the membrane.

13. Apparatus according to claim 1, wherein the spherical container is a membrane made of elastomeric material enclosed in a stainless steel casing, the external steel casing is made according to one or more of the previous claims from 2 to 6, and the membrane made of material elastomeric is made according to one or more of the previous claims from 7 to 12.
